# EUROPEAN PATENT APPLICATION

(11) **EP 2 842 529 A1**
(43) Date of publication of application: **04.03.2015**
(21) Application number: 13182410.4
(22) Date of filing: 30.08.2013
(51) Int. Cl.: A61F 9/08, G09B 21/00, H04S 7/00

(54) **Audio rendering system categorising geospatial objects**

(71) Applicant: GN Store Nord A/S, 2750 Ballerup (DK)
(72) Inventor: Mossner, Peter, 2770 Kastrup (DK)
(74) Representative: Zacco Denmark A/S

(57) **Abstract**

The present invention relates to a method and an audio rendering system comprising at least one portable terminal configured to receive geospatial object data from at least one geospatial object data server. The geospatial object data is interrelated to a geographical position. The at least one portable terminal is further configured to render retrieved geospatial object data into an acoustic scene by a rendering algorithm. The acoustic scene is spatially interrelated to the geographical position. The at least one audio unit is configured to sound a rendered acoustic scene information into at least one ear of a user. The audio rendering system is further configured for rendering retrieved geospatial object data into the acoustic scene based on categorised acoustic scene information representing a corresponding categorised geospatial object data.

## Description

### Field of invention

The present invention relates to an audio rendering system comprising at least one portable terminal configured to receive geospatial object data from at least one geospatial object data server. The geospatial object data is interrelated to a geographical position. The at least one portable terminal is further configured to render retrieved geospatial object data into an acoustic scene by a rendering algorithm. The acoustic scene is spatially interrelated to the geographical position. The at least one audio unit is configured to sound a rendered acoustic scene information into at least one ear of a user. The audio rendering system is further configured for rendering retrieved geospatial object data into the acoustic scene based on categorised acoustic scene information representing a corresponding categorised geospatial object data.

### Background of the invention

Walking and navigating in a geographical environment is, for most people, not considered challenging, but for a person being visually impaired it is a complicated and time consuming challenge.

Since it is challenging for a visually impaired person to walk and navigate in a geographical environment, many of these people are prevented from having a "normal life", including having a job, going to school, going out for shopping, visiting friends and family etc. Many of these visually impaired people suffer from depression and low self-confidence since they are afraid of leaving their home.

Guide dogs and canes have long been the staple assistive devices used by the blind community when navigating city streets. More recently, GPS has broadened the possibilities for autonomous exploration. A visual impaired person may use a GPS for navigating and for planning a route going from one place to another. Unfortunately, these systems do not comprise a sufficient amount of detail regarding the geographical environment entangling the planed route, which makes it uncomfortable for a visually impaired person to navigate in the geographical environment being entangled by the planed route. Furthermore, today's GPS systems guidei a person from a start to a finish destination by a voice guide, but does not comprise an audio representation of the geographical environment surrounding the user.

Considerable research has been invested in using spatialisied audio to navigate or render waypoints and points of interest (POI) information, but the resulting systems require the use of bulky, expensive or custom hardware and are thus not well-suited for wide deployment. Many research systems also depend on proprietary POI databases that cover only a small area, and which therefore are not easy to generalize to multiple cities or countries. The confluence of advanced smartphone technology and widely available geospatial databases offers the opportunity for a fundamentally different approach. The current generation of smartphones is sufficiently powerful to render multiple sounds of spatialised audio, and the quality and the physical size of today's GPS antenna, accelerometer and other sensors allows for a complete audio augmented reality system which is useful and enriching to the blind community. Our objective is to create a solution usable by simply installing a piece of software on a widely available device and by using an audio unit able to detect the orientation of the user's head.

### Summary

An objective of the invention is achieved by an audio rendering system comprising at least one portable terminal configured to receive geospatial object data from at least one geospatial object data server. The geospatial object data being interrelated to a geographical position. The at least one portable terminal is further configured to render retrieved geospatial object data into an acoustic scene by a rendering algorithm. The acoustic scene is spatially interrelated to the geographical position in such a way that the acoustic scene is perceived as observed from the geographical position. The at least one audio unit is configured to sound rendered acoustic scene information into at least one ear of a user. The audio rendering system is further configured for rendering retrieved geospatial object data into the acoustic scene based on categorised acoustic scene information representing corresponding categorised geospatial object data.

Thereby, what provided is an audio rendering system that overcomes problems of the prior art by providing a 3D acoustic scene which may be translated in the mind of a user into a picture of a virtual geographical environment representing the real geographical environment surrounding the user. For example, this would then give the user, e.g. a visually impaired person, a better impression of the geographical environment surrounding the user, and this would cause the visually impaired person to be more exploring and comfortable in a geographical environment by increasing the amount of insight of the surroundings and reducing the amount of time spend going from one place to another.

The portable terminal may be configured to transmit rendered acoustic scene information to an audio unit, wherein the audio unit may be configured to recreate the rendered acoustic information into a 3D sound and emitting the 3D sound. The emitted 3D sound may create a 3D scene to a user.

In one or more embodiments the portable terminal may be a smart phone, a laptop, a tablet, a headset with in-built processor and wireless connection, or an electronic intelligent processor device. The portable terminal may be configured to comprise rendered acoustic information, wherein rendered acoustic information may include an acoustic scene augmenting geographical environment. The geographical environment may be a school area, a street, a local park, inner city, a boat and a building and/or indoor constructions etc. The portable terminal may at least include 2g, 3g, 4g and/or 5g wireless network connectivity, a GPS unit, an orientation unit, a communication interface and a display unit. The orientation unit may include a gyro scope, an accelerometer and/or an electronic compass. A communication interface may receive and/or transmit acoustic information, acoustic scene, rendered acoustic scene information and/or recorded acoustic information.

The audio based learning system comprises an audio unit, wherein the audio unit may comprise at least one speaker, a headband or a neckband, a geographical position unit and a geographical orientation unit. Furthermore, the audio unit may comprise at least one microphone.

The geospatial object data may include geographical coordinates of the related first geospatial object. Furthermore, the geospatial object data may include at least a second geographical coordinate of at least a second geospatial objects being within a distance range of the first geospatial object.

The geospatial object data may be dynamical data, that is, data representing the coordinates of a moving object, such as a bus, a train or any kind of public transport. Furthermore, a sign, such as a bus sign, a road sign etc., may comprise an in-built GPS transmitter transmitting geographical coordinates, denoted as dynamical data, to a server whenever the sign is moved. This makes it possible to render the sign into an acoustic scene no matter which geographical position the sign has attained.

The acoustic scene may comprise categorised acoustic scene information including a specific sound denoting the interrelated geospatial object. Furthermore, the acoustics scene may comprise at least one categorised acoustic scene background sound. The categorised acoustic scene background sound being automatically configured by the portable terminal based on the categorised acoustic scene information. A user of the portable terminal may also generate a categorised acoustic scene background sound by recording a sound.

The categorisation of a categorised geospatial object data, categorised acoustic scene information and a categorised acoustic scene background sound may be carried out by a user or by a categorisation algorithm implemented in the audio rendering system.

It is understood that in a 3D acoustic scene, the audio unit may provide directional information about geospatial objects in the universe or the acoustic scene, according to the location of the user.

The audio rendering system comprises categorised geospatial object data and is configured to render a categorised acoustic scene information sounding a distinguishing sound representing at least one category.

Thereby, the user of the audio rendering system, receiving at least one piece of rendered acoustic scene information, is able to distinguish between geospatial objects categorised in different categories.

For example, a visually impaired user would be able to distinguish between different categorised geospatial objects placed within both short and long distances from the user by listening to the distinguishing rendered acoustic scene information. Today, a visually impaired person may listen to sonic sounds which are interpreted as a certain object by the person. This is done at short distances using a cane. Listening to the distinguishing rendered acoustic scene information compared to just listening to sonic sounds, gives the user a longer respond time to react to the geospatial object, whether it is a public transport, a building, a sign, or any kind of a geospatial object having geographical coordinates.

The audio rendering system including rendered acoustic scene information may comprise at least one 3D sound configured to sound at least one distinguishing acoustic scene, wherein the at least one acoustic scene is spatially interrelated to at least one geographical position.

The audio rendering system including rendered acoustic scene information may comprise at least one 3D sound configured to sound at least three distinguishing acoustic scenes, wherein the at least three acoustic scenes are spatially interrelated to at least one geographical position, respectively.

Thereby, the user may be able to orientate according to the 3D sound and being attracted by at least one rendered acoustic scene information leading the user towards a geospatial object spatially interrelated to the at least one rendered acoustic scene information. This would give the user a better opportunity of orienting according to an audio scene representing a geographical environment.

The audio rendering system including an audio unit comprising a geographical position unit configured to estimate the geographical position of the audio unit.

A user wearing the portable terminal and the audio unit may experience a 3D acoustic scene comprising plurality of acoustic scene objects. When the user is moving away from a geospatial object being augmented by an acoustic scene, the user will experience that the sound level of the acoustic scene would change, and thereby, causing a change in the 3D acoustic scene with respect to the estimated geographical position of the audio unit.

It is understood that in a 3D acoustic scene the audio unit may provide directional information about a geospatial object in the geographical environment according to where the user is.

A person skilled in the art will easily implement a 2D universe also with directional information, and in principle also a 1D universe.

In one or more embodiments the geographical position unit may comprise a global positioning system (GPS) unit for receiving a satellite signal for determining and/or providing the geographical position of the audio unit. Throughout the present disclosure, the term GPS-unit is used to designate a receiver of satellite signals of any satellite navigation system that provides location and time information anywhere on or near the Earth, such as the satellite navigation system maintained by the United States government and freely accessible to anyone with a GPS receiver and typically designated "the GPS-system", the Russian GLObal NAvigation Satellite System (GLONASS), the European Union Galileo navigation system, the Chinese Compass navigation system, the Indian Regional Navigational Satellite System, etc, and also including augmented GPS, such as StarFire, Omnistar, the Indian GPS Aided Geo Augmented Navigation (GAGAN), the European Geostationary Navigation Overlay Service (EGNOS), the Japanese Multifunctional Satellite Augmentation System (MSAS), etc.

In one or more embodiments the geographical position unit is a WiFi-network with different stations or fix points and means for determining a position by triangulation or geometrical functions alike.

The user moving around in the local environment would experience a spatially interrelation between the audio unit and the plurality of geospatial objects, since when the user is moving towards or away from a geospatial object the user would experience a change of the 3D acoustic scene according to his/her position, e.g. the sound level of the acoustic scene would decrease when the user is moving away from the zone.

Again, the audio unit may provide directional information about the geospatial objects according to where the user is.

The audio rendering system's audio unit comprises a geographical orientation unit for estimating a geographical orientation of a user when the user operates the orientation unit in its intended operational position.

A user wearing a portable terminal and the audio unit would experience an improved spatial interrelation since the 3D acoustic scene would change according to his/her position and orientation in the local environment, e.g. when the user is moving away from a geospatial object the user would experience that the sound level of the acoustic scene would change. If the user changes his/her orientation the user would experience a change of sound levels of the acoustic scene, e.g. the user changing the attention from a first geospatial object to a second geospatial object, the sound level of the second acoustic scene interrelating to the second geospatial object would be higher than the sound level of the first acoustic scene interrelating to the first geospatial object. Thereby, since the 3D acoustic scene depends on the position and the orientation, the spatial interrelation between a geospatial object and the audio unit is further improved.

In a particular embodiment a geospatial object may start to interact with a user when the audio unit is directed towards the geospatial object. In a particular case this may be when the user faces the geospatial object. It may also be possible that a moveable geospatial object becomes relatable with the audio unit when the user has directed his/hers attention towards the moveable geospatial object.

The geographical position unit and the orientation unit enhance the comfort of a visually impaired person moving in a geographical environment, and furthermore, enables the visually impaired person i to orient in relation to the audio sounds.

The audio rendering system comprises a rendering algorithm configured to render the retrieved geospatial object data into the acoustic scene based on the geographical position and/or the geographical orientation.

The rendering algorithm may also be configured to render the retrieved geospatial object data into the acoustic scene based on the surroundings, e.g. the user wearing the audio unit and the portable terminal and the user may be in a tunnel, the 3D acoustic scene would be modified by adjusting the volume, the treble, the bass and the echo of the plurality of acoustic objects, to obtain a 3D acoustic scene generating the impression of standing in a tunnel to the user.

The audio rendering system including the rendering algorithm is configured to render the retrieved geospatial object data into the acoustic scene based on a field-of-view range. The field of view range interrelate to the vision field of the user wearing the audio unit. For example, a visually impaired person would be able to search and find specific geospatial objects, since the rendering algorithm would create a 3D acoustic scene leaving the impression to the user that he/she is moving in the right direction.

The audio rendering system comprises a category selection tool configured to select at least one categorised geospatial object data, wherein the selected geospatial object data is being rendered into at least one acoustic scene based on at least one category variable.

Thereby, the user may be able to select at least one category of interest, and thereby, the rendering algorithm may retrieve and render at least one relevant categorised geospatial object data into at least one acoustic scene. For example, the user is searching for a specific category, e.g. "shoe shops", the user selects the category "shoe shop" and/or "clothing". Thereby, the portable terminal may only retrieve categorised geospatial objects, which is about "shoe shops" and/or "clothing" shops selling shoes. This would give the user the possibility of being able to orientate in a geographical environment listening to a geographical environment background sound and to plurality of rendered acoustic scene information having the interest of the user. The geographical background sound may represent the geographical environment surrounding the user. The geographical background sound may be generated by the portable terminal.

Orientating in a geographical environment listening to plurality of rendered acoustic scene information having the interest of the user, makes it easier for a visually impaired person to go out having a certain agenda and following it, e.g. the agenda is shopping or transporting from A-position to Z-position including several public transport shifts, i.e. the user is only interested in receiving rendered acoustic scene information about public transport signs.

The audio rendering system comprises a safety tool configured to activate at least one rendered warning sound when a warning object is within a warning zone, and wherein the at least one rendered warning sound is spatially interrelated to a geographical position of the warning object.

The audio rendering system comprises a safety tool configured to mute at least one rendered acoustic scene information and playing at least one rendered warning sound.

Thereby, the user is able to define at least one warning object, such as a public transport, which needs the attention of the user. For example, the user is nearing a rail crossing and a train is approaching the rail crossing. When the train has entered the warning zone the safety tool is able to either mute or lower the sound level of the rendered acoustic scene information and playing a rendered warning sound spatially interrelating to the train. This would enhance the safety of wearing an audio unit, such as a headset or an earphone.

The audio rendering system comprises a routing tool for determining at least one route between at least one start location and/or at least one end location or destination with at least one geographical position. The at least one route includes at least one rendered acoustic scene information being spatially interrelated to the at least one geographical position along the least one route.

Thereby, the user is able to plan a route or a tracking route in a geographical environment beforehand. Furthermore, the user is able to generate a 3D acoustic scene for the geographical environment being entangled by the planned route including rendered acoustic scene information spatially interrelated to a geographical object and geographical position. Furthermore, the user is able to simulate the planned route or tracking route when the routing tool is in a demo mode. This would adapt the user to the geographical environment entangled by the planed route or the tracking route beforehand. The routing tool would then increase the comfort of a visually impaired person moving in the geographical environment.

The audio rendering system includes the routing tool, wherein the routing tool comprises a marker or a geographical attribute, wherein the marker or geographical attribute enables the possibility of inducing an acoustic marker being spatially interrelated to the geographical position.

Thereby, the routing tool provides the possibility for the user of being able to add a marker or geographical attribute to a geographical position relating to an obstacle which he/she would like to avoid. When the user is walking the route or the tracking route and the marker or geographical attribute s retrieved by the portable terminal the audio unit would sound a distinguishing sound representing the geographical marker. This would increase even more the comfort of a visually impaired person moving around in a geographical environment.

The audio rendering system including the routing tool is able to receive at least one geographical acoustic marker from a marker server.

Thereby, a marker server is configured to share marker or geographical attribute being created by a plurality of users. The user of the audio rendering system has the possibility of adding geographical marker, generated by another user, to the geographical environment being entangled by the route or the tracking route. This would increase the possibility of marker any kind of obstacles which the user is not aware of. This would increase the comfort of a visually impaired person walking in a geographical environment.

In one aspect, the marker is a tag with properties as a beacon. In one embodiment, a street light may be categorised and used a marker being represented by a distinctive sound such as a beep. Each street light will then represent a marker and be represented as beeps in the acoustic scene. Thus, a user using the audio rendering system will experience an audio universe with beep sounds from positions relative to the geographical position, and the user will be able to hear the shape of the street lights and then the shape of the border between the pavement and the street.

In a variant, the beeps of such markers will appear sequentially and be observed as running.

In one aspect such marker are distributed by the user along distinctive geographical positions along a route. Hence, each marker being a distinctive sound may serve as ad beacon. The user may then be able to practice a route by means of simple distinctive sounds as beacons in a virtual reality, or use the markers as beacons in a real world to navigate.

In one aspect of the invention a method of sounding rendered acoustic scene information into at least one ear of a user using an audio rendering system which may comprise the steps of receiving geospatial object data from at least one geospatial object data server, the said geospatial object data being interrelated to a geographical position. The audio rendering system then renders the retrieved geospatial object data into an acoustic scene by a rendering algorithm, which the acoustic scene is spatially interrelated to the geographical position. The audio rendering system then sounds the rendered acoustic scene into at least one ear of a user. The audio rendering system then renders the retrieved geospatial object data into the acoustic scene based on a categorised acoustic scene representation corresponding to a categorised geospatial object data.

According to an embodiment, the system may be configured with means for allowing a user to focus on a geographical object data. When a geographical object data is focused on and subsequently selected, geographical object data is retrieved and rendered into the acoustic scene as a narrative.

It is understood that the geographical object data - such as text or numbers - may be interpreted and made into speech by a speech processor so that the data is made into a sound similar to a spoken language of the user.

Thereby, the user may be able to obtain (further) detailed information about the geographical object. The user may also be able to verify if the selected geographical is actually correct or as expected.

According to an embodiment, focus on a geographical object data is determined as an intersection between a line of sight from the geographical position, for a given orientation, and a geographical position of the geographical object.

In such embodiment the focusing is performed easily and automatically.

According to an embodiment, geographical object data within a given area is resolved by separating each geographical object data. Such separation may be performed spatially and may be performed by stacking each geographical object data on top of each other in the acoustic scene (3D) or with different polar angles. The separation may also be performed temporally by sounding each geographical object data sequentially and separated in time.

Thereby, the system is capable of separating and distinguishing objects that are clustered together in an area that, from the point of observation, would otherwise be inseparable.

According to an embodiment of the invention, a method of sounding rendered acoustic scene information into at least one ear of a user using an audio rendering system comprises a step of receiving geospatial object data from at least one geospatial object data server, said geospatial object data being interrelated to a geographical position. A step of rendering retrieved geospatial object data into an acoustic scene by a rendering algorithm, which acoustic scene is spatially interrelated to the geographical position, and where the rendering of retrieved geospatial object data into the acoustic scene is based on a categorised acoustic scene representation corresponding to a categorised geospatial object data.

According to an embodiment of the invention, further steps of providing at least one route with at least one geographical position between at least one start location and at least one end location, wherein the at least one route includes at least one acoustic scene being spatially interrelated to the at least one geographical position along the least one route, and moving said geographic position between said least one start location and said least one end location and continuously sounding rendered acoustic scene information into at least one ear of a user according to claim for each geographic position.

According to an embodiment, a method may further comprise one or more steps of providing at least one route with at least one geographical position between at least one start location and at least one end location, wherein the at least one route includes at least one acoustic scene being spatially interrelated to the at least one geographical position along the least one route (27), and moving said geographic position between said least one start location and said least one end location and continuously sounding rendered acoustic scene information into at least one ear of a user.

The audio rendering system may comprise a number of parameters including sound source specification (device, file, and signal generator plug-ins), source gain, source location, source trajectory, listener position, listener HRTF (Head-Related Transfer Function) database, surface location, surface material type, rendered plug-in specification, scripting, and low-level signal processing parameters.

Potential applications include psychoacoustic research, spatial auditory display prototypes, virtual reality for simulation and training, augmented reality for improved situational awareness and enhanced communication systems. For these applications and others, the audio rendering system provides a low-cost system for dynamic synthesis of virtual audio over an audio unit, e.g. a headset, without the need of special purpose signal processing hardware.

Rendered acoustic scene information may be generated by the rendering algorithm running on a computer, providing a flexible, maintainable, and extensible architecture to enable the quick development of an audio based route or tracking route. The rendering algorithm may be provided by an API (Application Programming Interface), for specifying the route and the acoustic scenes as well as an extensible architecture for exploring multiple routing and rendering strategies.

An acoustic scene information may comprise a virtual source generated by the portable terminal. The acoustic scene information may be transferred to a portable terminal or a terminal, and thereby the portable terminal and/or terminal may transfer the acoustic scene information to an audio unit.

The audio rendering system comprises a search tool configured to specifically render at least one categorised geospatial object data into at least one acoustic scene based on at least one category variable and at least one search variable.

Thereby, the user may be able to search more specifically after certain objects, such as brands, types of shoes, clothing etc. This has the advantage of making shopping for certain objects easier for everybody, including the visually impaired.

The audio rendering system comprises a rendering algorithm being able to render a retrievable geospatial object according to the interrelated categorised colour data, wherein the categorised colour data may comprise at least one colour representing the retrievable geospatial objects and interrelate to a categorised colour sound.

Thereby, the rendering algorithm may be able to enhance the senses of a user being visually impaired. This would not only increase the ease with which a visually impaired person can move around in a geographical environment, but also increase his/hers life quality, since the user is able to distinguish objects by a sound and a colour. Hence, a visually impaired person will be able to share the experience of colours with non-visually impaired persons. In one example, a geospatial object will include data about the colour, say red (bricks), of an object, say a house. Such red house may be a distinctive building being a landmark and this will allow the visually impaired person to navigate relatively to the red building, since by categorising according to the colour "red" will result in an acoustic scene with a distinctive sound, say an intermittent sound with a specific frequency.

The audio rendering system comprises a rendering algorithm which is able to render retrievable geospatial objects according to their physical size and shape. E.g. a first building interrelating to a first size/shape sound and a second building being smaller than the first building interrelating to a second size/shape sound. The first building and the second building may be categorised similarly comprising the same articles. The first building is larger than the second building and/or the first building having a different shape than the second building. The first size/shape sound may have a different configuration compared to the second size/shape sound representing the size and/or shape difference between the first and second buildings.

Thereby, the senses of a user are even more strengthened since the user is able to distinguish between different kinds of objects, colours, shapes and sizes. Therefore, the life quality of a visually impaired person would increase.

The audio rendering system comprises a rating feature, wherein the rating feature is able to rate at least one categorised geospatial object data based on a rating variable.

Thereby, the user is able to distinguish between the quality of similar categorised geospatial objects. E.g. a user may be able to distinguish the service quality of a plurality of similar service businesses, such as restaurants, cafes etc.

The audio rendering system may comprise a geospatial object data server including at least one dynamical geospatial data and/or at least one geospatial object data.

The audio rendering system may comprise a markerserver and/or a storage device for storing an acoustic marker and a marker geographical marker interrelated to the geographical position of the acoustic marker.

A visually impaired person is a person who has lost his/her vision to such a degree as to qualify as an additional support need due to a significant limitation of visual capability resulting from either disease, trauma, congenital, or degenerative conditions that cannot be corrected by conventional means, such as refractive correction or medication.

### Brief Description of Drawings

Embodiments of the invention will be described in the figures, whereon:
- Fig. 1: illustrates an exemplary audio rendering system with a portable terminal, audio unit and a geospatial object,
- Fig. 2: illustrates an exemplary audio rendering system wherein a user wearing a portable terminal and an audio unit is focusing on a geospatial object and retrieving a categorised geospatial object data,
- Fig. 3: illustrates an exemplary audio rendering system wherein a user is surrounded by a plurality of geospatial objects and an audio unit is sounding a 3D sound into the ears of the user,
- Fig. 4: illustrates an exemplary audio rendering system wherein a user is retrieving a geospatial object data within a field-of-view range,
- Fig. 5: illustrates an exemplary audio rendering system wherein a geospatial object may comprise a plurality of geospatial object data,
- Fig. 6: illustrates an exemplary audio rendering system wherein a user is centralized in a capture zone having a capture radius,
- Fig. 7: illustrates a flow diagram of a rendering algorithm,
- Fig. 8: illustrates a flow diagram of a category variable,
- Fig. 9: illustrates an exemplary audio rendering system wherein a user is centralised in a capture zone and a warning zone,
- Fig. 10: illustrates a flow diagram of a routing tool and a rendering algorithm,
- Fig. 11: illustrates a graphical user interface of a routing tool being in an automatic routing mode,
- Fig. 12: illustrates a graphical user interface of a routing tool being in a manually routing mode,
- Fig. 13: illustrates a graphical user interface of a routing tool being in a demo mode, and
- Fig. 14: illustrates a user moving on a tracking exploring a 3D audio world including a plurality of geospatial objects and/or geographical markers.

**Detailed Description**

| **Item** | **No** |
|---|---|
| Audio rendering system | 1 |
| Portable terminal | 2 |
| Audio unit | 3 |
| Acoustic scene information | 4 |
| Acoustic scene | 5 |
| First acoustic scene object | 5A |
| Second acoustic scene object | 5B |
| Third acoustic scene object | 5C |
| Fourth acoustic scene object | 5D |
| Geographical position | 6 |
| | |
| First Geographical position | 6a |
| Second Geographical position | 6b |
| Third Geographical position | 6c |
| Fourth Geographical position | 6d |
| Geospatial object data | 7 |
| First geospatial object data | 7A |
| Second geospatial object data | 7B |
| Third geospatial object data | 7C |
| Fourth geospatial object data | 7D |
| Geospatial object data server | 8 |
| Rendering algorithm | 9 |
| Rendered acoustic scene information | 10 |
| First Rendered acoustic scene information | 10A |
| Second Rendered acoustic scene information | 10B |
| Third Rendered acoustic scene information | 10C |
| Fourth Rendered acoustic scene information | 10D |
| 3D sound | 11 |
| Distinguishing sounds | 12 |
| Geographical position unit | 13 |
| Geographical orientation unit | 14 |
| Field-of-view attribute | 15 |
| Categorised geospatial object data | 16 |
| First categorised geospatial object data | 16A |
| Second categorised geospatial object data | 16B |
| Third categorised geospatial object data | 16C |
| Fourth categorised geospatial object data | 16D |
| Categorised acoustic scene information | 17 |
| First categorised acoustic scene information | 17A |
| Second categorised acoustic scene information | 17B |
| Third categorised acoustic scene information | 17C |
| Fourth categorised acoustic scene information | 17D |
| Geospatial object | 18 |
| First Geospatial object | 18A |
| Second geospatial object | 18B |
| Third geospatial object | 18C |
| Fourth geospatial object | 18D |
| Geographical orientation | 19 |
| Category selection tool | 20 |
| Init category variable | 20A |
| Select categorised geospatial object data | 20B |
| Match selected categorised geospatial object data with a categorised acoustic scene information | 20C |
| Match found | 20D |
| Storing the matched categorised geospatial object data and the categorised acoustic scene information | 20E |
| Ending the category searching tool | 20F |
| Automatic routing tool | 21 |
| Start location | 21A |
| Final destination | 21B |
| Generate button | 21C |
| Graphic display | 21D |
| Field-of-view attribute button | 21E |
| Random mode button | 21F |
| Specific mode button | 21G |
| Enter demo mode | 21H |
| Start tracking and rendering | 21I |
| Load routing | 21J |
| Save the routing | 21K |
| Automatic planning | 21X |
| Manual planning | 21Y |
| Manually routing tool | 22 |
| Plurality of waypoints | 22A |
| Add waypoint | 22B |
| Waypoint list | 22C |
| Remove waypoint | 22D |
| Edit waypoint | 22E |
| Demo tool | 23 |
| Load marker | 23A |
| Set marker | 23B |
| Apply marker | 23C |
| Cancel marker | 23D |
| Spool backward | 23E |
| Pause, play and stop simulation | 23F |
| Spool forward | 23G |
| Back button | 23H |
| Categorised acoustic scene background sound | 24 |
| First categorised acoustic scene background sound | 24A |
| Second categorised acoustic scene background sound | 24B |
| Third categorised acoustic scene background sound | 24C |
| Fourth categorised acoustic scene background sound | 24D |
| Orientation range | 25 |
| Routing tool | 26 |
| Tracking route | 27 |
| Warning object | 28 |
| Safety tool | 29 |
| Warning zone | 30 |
| Rendered warning sound | 31 |
| Activation button | 32 |
| Main viewing axe | 33 |
| Dynamical geospatial data | 35 |
| Manually or automatically set route parameter | 36A |
| Random mode | 36B |
| Specific mode | 36C |
| Set Geographical orientation range and capture radius | 36D |
| Entering category selecting tool | 36E |
| Activating the field-of-view attribute | 36F |
| Set safefy tool | 36G |
| Go rendering algorithm | 36H |
| Initialize geographic position counter | 36I |
| Scanning orientation range | 36J |
| Scanning field-of-view | 36K |
| Retrieve categorised acoustic scene information and categorised geospatial object data | 36L |
| Rendering of the retrieved categorised geospatial object data. | 36M |
| Reached the finally destination? | 36N |
| End the rendering algorithm | 36O |
| Geographical environment background sound | 37 |
| Geographical marker | 45 |
| Acoustic marker | 48 |
| Marker server | 49 |
| User | 50 |
| Sound direction | 51 |
| "Audio configured to a picture in mind" | 52 |
| Church building | 53 |
| Stop sign | 54 |
| Focus direction | 55 |
| Satellite system | 56 |
| GPS satellite signal | 57 |
| Audio rendering | 58 |
| Capture zone | 59 |
| Retrievable geospatial objects | 60 |
| First retrievable geospatial object | 60A |
| Second retrievable geospatial object | 60B |
| Third retrievable geospatial object | 60C |
| Fourth retrievable geospatial object | 60D |
| None- retrievable geospatial objects | 61 |
| First none- retrievable geospatial objects | 61A |
| Second none- retrievable geospatial objects | 61B |
| Rendering counters | 62 |
| Geographic position counter | 62A |
| Geographic orientation counter | 62B |
| Retrieve geospatial object data | 62C |
| Render retrieved geospatial object data into the related acoustic scene | 62D |
| Repeat the geographic position counter | 62E |
| Arrive at the end location of the tracking route | 62F |
| Geographical environment | 63 |
| Field-of-view range | 64 |
| First field-of-view angle | Θ₁ |
| Second field-of-view angle | Θ₂ |
| Capture radius | R_{capture} |
| Warning radius | R_{warning} |

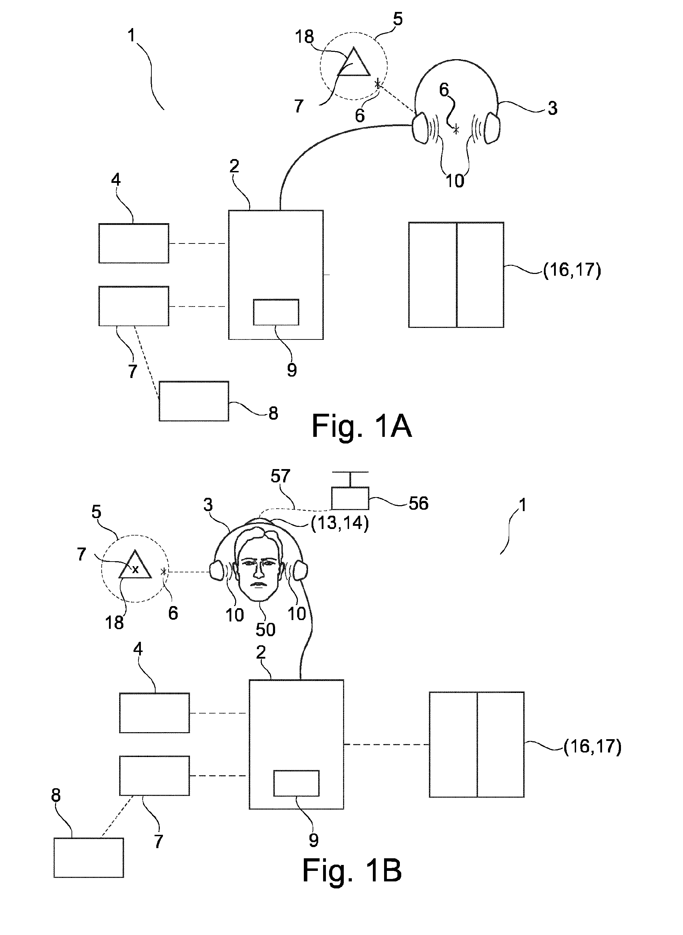

Fig. 1A schematically illustrates an exemplary audio rendering system 1 according to the invention. The audio rendering system 1 has at least one terminal, at least one audio unit and at least one geospatial object, wherein the at least one terminal may retrieve at least one acoustic scene information and at least one geospatial object data stored in respective storage devices. The respective storage devices may be externally storage devices, i.e., a server or a memory device. The respective storage devices may be internally storage devices configured to the terminal.

The at least one terminal may also retrieve at least one categorised geospatial object data and/or at least one categorised acoustic scene information storage in an internally or an externally storage device. The geospatial object data and categorised geospatial object data may comprise geographic coordinate, such as GPS coordinate, Universal Transverse Mercator (UTM) coordinate, Universal Polar Stereographic (UPS) coordinate and/or Cartesian coordinate. The categorised acoustic scene information may include a distinguishing sound representing at least one category of the corresponding categorised geospatial object data.

The terminal may be a portable terminal connected wired or wirelessly to an audio unit.

The terminal may also be a stationary terminal connected wirelessly to an audio unit, e.g. the stationary terminal may be a server of any kind or a PC.

In this particularly example, the audio rendering system 1 comprises a portable terminal 2, an audio unit 3 and a geospatial object 18. The portable terminal 2 comprises at least acoustic scene information 4 and at least one geospatial object data set 7. A user or an algorithm may categorise the geospatial object data 7 into a categorised geospatial object data 16. Furthermore, the user or the algorithm may also categorise the at least one acoustic scene information 5 into a categorised acoustic scene information 17.

The portable terminal 2 is configured to receive geospatial object data 4 from the at least one geospatial object data server 8, which geospatial object data 7 is interrelated to a geographical position 6. The portable terminal 2 is further configured to render retrieved geospatial object data 4 into an acoustic scene 5 by a rendering algorithm 9, wherein the acoustic scene 5 comprises at least rendered acoustic scene information 10 spatially interrelated to the geographical position 6 such that the listening point is the geographical position 6 or equivalently, the point of observing or spatially interrelating the geographical object 18 is the geographical position 6. The audio unit 3 is configured to sound rendered acoustic scene information 10 into at least one ear of a user.

Thus, the geographical position 6 may be the point of observing or listening.

Furthermore, the portable terminal 2 may be configured for rendering retrieved geospatial object data 7 into the acoustic scene 5 based on categorised acoustic scene information 17 representing a corresponding categorised geospatial object data 16.

Hence, the rendered acoustic scene 10 may comprises only information representing only categorised geospatial object data 16 and thus providing a clear, simple audio landscape of only the selected, i.e. according to the categorisation, geospatial objects 18 presented to the user as from the listening point of the geographical position 6.

In a particular, and by no means exclusive example, a geospatial object 18 type, say an entrance to a subway is categorised as a "hole in the ground" and represented with a high pitch single beep that is repeated periodically just like when a radar scans an area. When the geographical position 6 moves and/or the orientation changes, the spatial interrelation between the listening point and the geospatial object 18 then changes, said change is reflected in the volume and/or the orientation of the high pitch single beep.

Fig. 1B schematically illustrates an exemplary audio rendering system 1 similar to the one disclosed in fig. 1A, wherein the audio unit 3 may be a headset, earphone or any kind of a head wearing audio unit comprising a geographical position unit 13 and/or a geographical orientation unit 14 . The geographical orientation unit 14 may include at least one gyro and/or at least one accelerometer and/or at least one electronic compass for measuring, e.g. head yaw, head pitch and/or head roll. In this particular example the geographical orientation unit 14 includes one gyro to measure the orientation of a user's head 50, e.g. head yaw. The geographical position unit 13 may include a GPS unit receiving a GPS satellite signal(s) 57 from a satellite system 56. The geographical position unit 13 thus determines the geographical position of the user 50 wearing the audio unit 3.

The geographical position 6 may be the actual location of the audio unit 3 and the point of observing or listening of the user 50.

Another embodiment of the audio rendering system 1 that is similar to the one disclosed in figure 1A, is that the geographical position unit 13 and/or the geographical orientation unit 14 may be referenced to a local universe that is stationary such as a building, a warehouse, a department store or a stadium or to a moving vessel such as a ship, a vehicle or an airplane with a specified layout. That is, the layout may be stationary or moving about relatively to a fixed set of coordinates. In such embodiment the geographical position unit 13 and/or geographical orientation unit 14 may rely on receiving signals from locally placed transmitters and triangulation or equivalent thereof to determine the position and/or orientation relative to those transmitters.

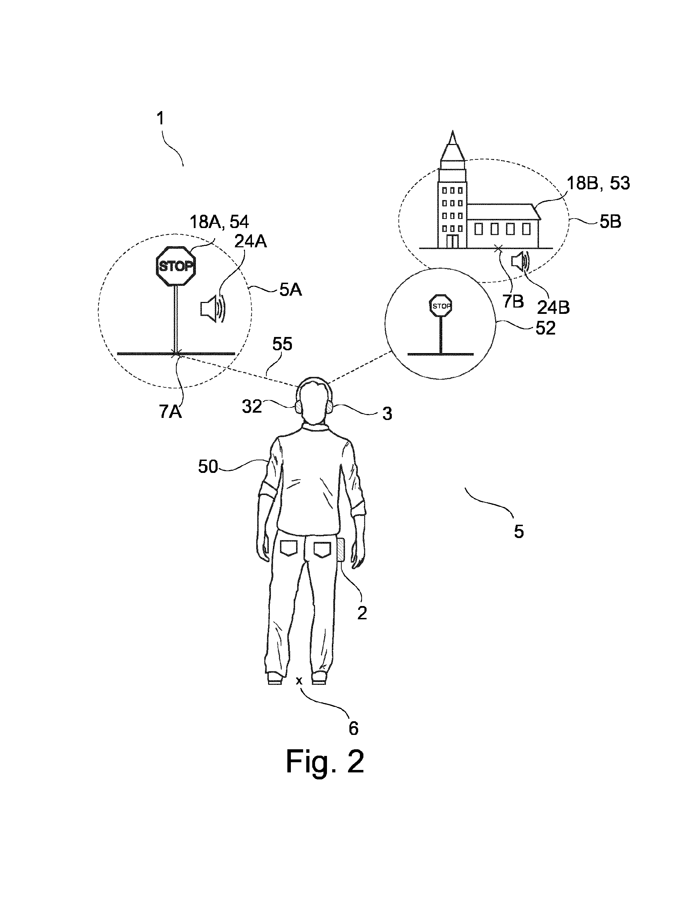

Fig.2 schematically illustrates an exemplary audio rendering system 1 in continuation of fig. 1, wherein a user is wearing a portable terminal 2 and an audio unit 3, as intended, and focusing on a geographical object 18, wherein the geographical object 18 is related to at least one geospatial object data 7 and being spatially interrelated to the geographical position 6 and rendered into an acoustic scene 5 as observed from the geographical position 6. The acoustic scene 5 may comprise at least one categorised acoustic scene information 17 and an acoustic scene background sound 24 being automatically configured by the portable terminal 2 based on the categorised acoustic scene information 17.

The portable terminal 2 may render the retrieved geospatial object data into the acoustic scene 5 based on the categorised acoustic scene information 17 representing a corresponding categorised geospatial object data 16. The audio unit 3 then sounds the rendered acoustic scene information 10 being spatially interrelated to the geographical position 6. The audio unit 3 may be a headset having a neckband or a headband. The audio unit 3 may comprise at least one speaker and/or a microphone.

The audio unit 3 may include an activation button 32, so when the user 50 focus on the acoustic scene 5 and initializes the activation button 32, the corresponding rendered acoustic scene information 10 may be played on top of the categorised acoustic scene background sound 24.

In another embodiment, when the user initializes the activation button 32 the rendered acoustic scene information 10 may be sounded and the categorised acoustic scene background sound 24 may be muted.

In this particularly example, the user 50 wears an audio unit 3 and focus 55 on a first geospatial object 18A being a "STOP sign" 54, and the portable terminal 2 retrieves a first geospatial object data 7A, including first geographical coordinates, and/or geographical position of the geospatial object, of the "STOP sign" 54. The "STOP sign" 54 is represented by a first acoustic scene object 5A comprising at least one first categorised acoustic scene information 17A and possibly at least first categorised acoustic scene background sound 24A. The first acoustic scene object 5A may be spatially interrelated to a geographic position 6.

Stop signs 54 may be categorised as "high pitch beeps" thus resulting in "high pitch beeps" being sounded from the position of the stop sign 54. The "high pitch beeps" may be more frequent since the user 50 focus 55 on the stop sign 54.

The user 50 may also be in a setting with a second geospatial object 18B being a church 53 present. Again the portable terminal 2 retrieves a second geospatial object data 7B including second geographical coordinates, and/or geographical position of the geospatial object, of the church 53. The church is represented by a second acoustic scene object 5B comprising at least one second categorised acoustic scene information 17B and possibly at least second categorised acoustic scene background sound 24B. The second acoustic scene object 5B is spatially interrelated to the geographic position 6.

Churches 53 may be categorised and assigned a "church bell"-sound thus resulting in "chimes of a bell" being sounded from the relative position of the church 53. The "chimes of the bell" may be less frequent since the user 50 does not focus 55 on the church.

The portable terminal 2 generates at least one rendered acoustic scene information 10 based on a rendering algorithm 9 and on the retrieved first categorised acoustic scene information 17A representing the corresponding first categorised geospatial object data 16A.

Additionally, the portable terminal 2 may render the first categorised acoustic scene background sound 24A and the second categorised acoustic scene background sound 24B.

In an embodiment the user 50 may select the rendered acoustic scene information 10 to be played on top of the first and the second categorised acoustic scene background sounds (24A - 24B) into the ears of the user 50.

Thus, the categorised geospatial object 18A being a Stop Sign 54 in the category of "signs regulating traffic" generates a "picture in mind" 52 or makes the user 50 associate a certain class or category of objects.

In this particular example, the user 50 who wants to navigate to the church 53 will get a simplified (yet relevant) representation of the scene to navigate in order to move about say to get to the church 53.

In an embodiment the activation button 32 may be a simple switch turning on and off the system and the activation may happen has a result an intersection of a line of sight of the user wearing the audio unit 3 and a particular geographical position 6.

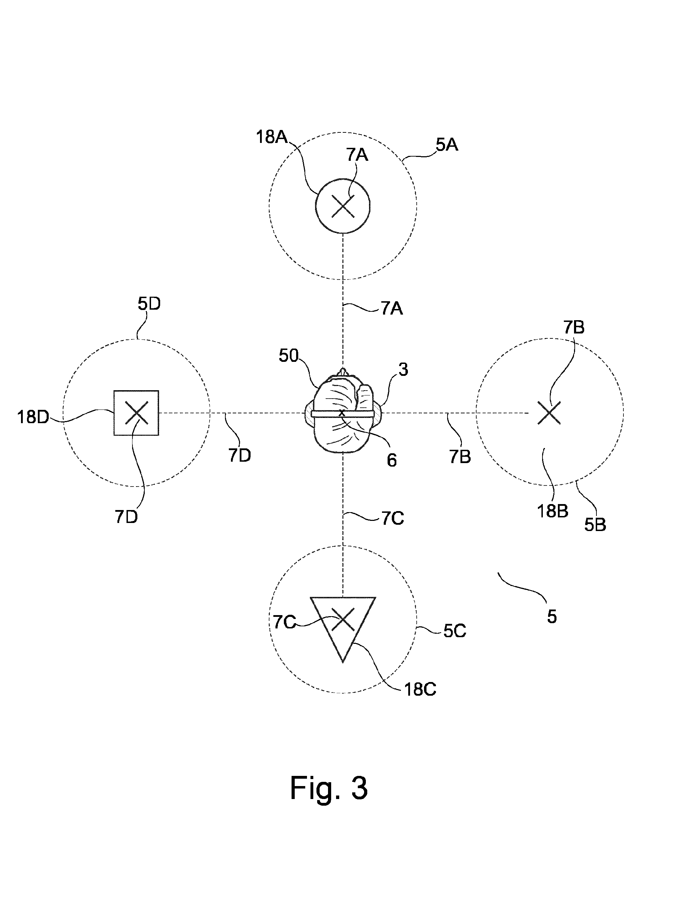

Fig. 3 schematically illustrates an exemplary audio rendering system 1, wherein a user 50 wearing a portable terminal 2 and an audio unit 3 is located at a geographical position 6 and surrounded by a plurality of geospatial objects (18A - 18D). The plurality of geospatial objects (18A - 18D) each have geospatial data (7A - 7D) including their geographical location and geographically interrelated to a categorised geospatial object data (16A - 16D).

The geographical locations included in the geospatial object data (7A - 7D) are spatially interrelated to respective acoustic scene objects (5A - 5D), wherein the respective acoustic scene objects (5A - 5D) contain categorised acoustic scene information (17A - 17D) and possibly a categorised acoustic scene background sound 24.

The portable terminal 2 retrieves the geospatial object data (7A - 7D) and matches the categorised acoustic scene information (17A - 17D) based on the categorised geospatial object data (16A - 16D). The portable terminal 2 renders the retrieved geospatial object data (7A - 7D) into the respective acoustic scene objects (5A - 5D) based on the categorised acoustic scene information (17A - 17D) and the categorised geospatial object data (16A - 16D) forms an acoustic scene 5 that generates a rendered acoustic scene information 10 soundable to the user 50.

The audio unit 3 sounding the respective rendered acoustic scene information 10 (10A - 10D) into the ears of the user 50, wherein the respective rendered acoustic scene information (10A - 10B) spatial interrelating to the respective geographic locations contained in the geospatial object data (7A - 7D) may be configured to sounding a 3D sound into the ears of the user 50.

In another embodiment, the respective rendered acoustic scene information 10 (10A - 10D) may be categorised acoustic scene background sounds 24 (24A - 24D).

The portable terminal 2 includes a rendering algorithm 9 configured to render the respective retrieved geospatial object data (7A - 7D) into the respective acoustic scene objects (5A - 5D), wherein the rendering may depend on the geographical position 6 and the geographical orientation 19 of the user. In this particular example the user 50 is placed in a uniformly distance to each of the geospatial object (18A - 18D) having a main focus on the first geospatial object 18A. The rendering of the respective retrieved categorised geospatial object data (16A - 16D) is differently performed since the user 50 is oriented differently to each of the respective geospatial objects (18A - 18D). The first rendered acoustic scene information 10A of the first geospatial object 18A would be played on top of the remaining geospatial object (18B - 18D) and the rendered acoustic scene information 10A would sound like it comes from in-front of the user. The remaining rendered acoustic scene information (10B - 10D) would sound lower and having respective acoustic directions coming from the respective geographical locations contained in the geospatial objects data (7B - 7D).

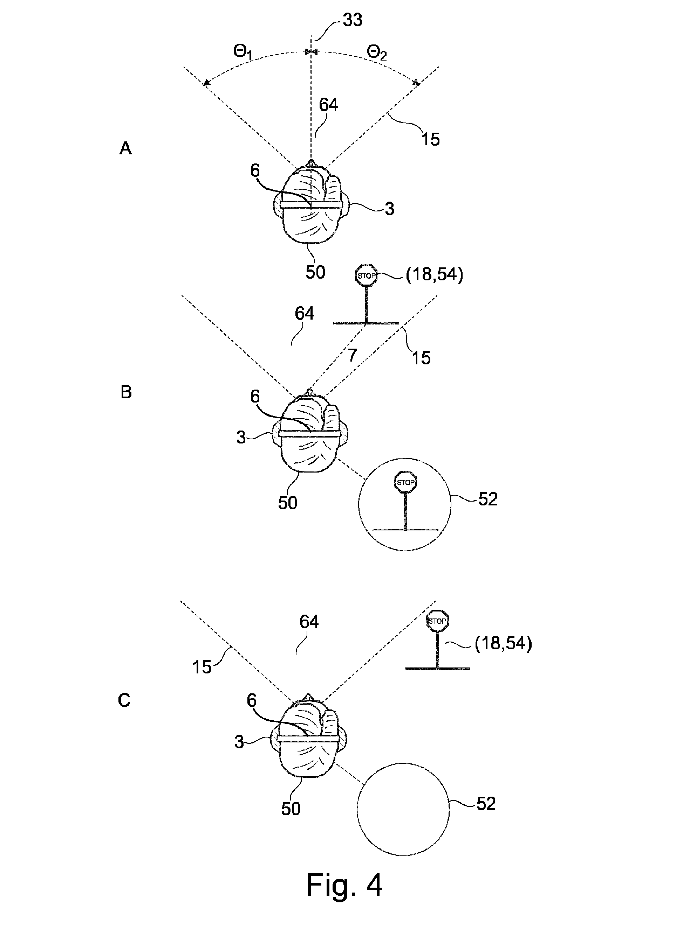

Fig. 4A - 4C schematically illustrates an exemplary implementation of a audio rendering system 1, wherein a main viewing axe 33 pointing in the focus direction in a field-of-view range 64 comprises a first field-of-view angle Θ₁ and a second field-of-view angle Θ₂. The first field-of-view angle Θ₁ and the second field-of-view angle Θ₂ may be uniformly or non-uniformly. In this particular embodiment, the field of view 64 is used to filter an acoustic scene 5. The main viewing axis 33 may be identical to a geographical orientation 19.

Fig. 4B the user is wearing an audio unit 3 as intended and a portable terminal 2 including a rendering algorithm 9 configured to render the retrieved geospatial object 18 with geospatial object data 7 containing a location interrelating to the geographical position 6 and being within the field-of-view range 64. In this particular example the geospatial object 18 is a "STOP sign" 54 being within the field-of-view range 64. The rendering algorithm 9 renders the retrieved geospatial object data 7 creating a picture in mind 52 relating to a "STOP sign" 54 as a result of the categorisation

Fig. 4C illustrates a situation where none geospatial object 7 is within the field-of-view range 64, and thereby, the rendering algorithm 9 does not retrieve a geospatial object data 7 which location is outside the field of view 64.

The field-of-view range 64 is a total angle span including the sum of the first field-of-view angle Θ₁ and the second field-of-view angle Θ₂. The first field-of-view angle Θ₁ and the second field-of-view angle Θ₂ may be in the range of 5° to 180°, such as 10° to 170°, such as 20° to 160°, such as 40° to 150°, such80° to 140°, and such as around the field of view of a human.

The field-of.-view range 64 may be initialized in a field-of-view attribute 15, wherein the user is able set the first field-of-view angle Θ₁ and the second field-of-view angle Θ₂.

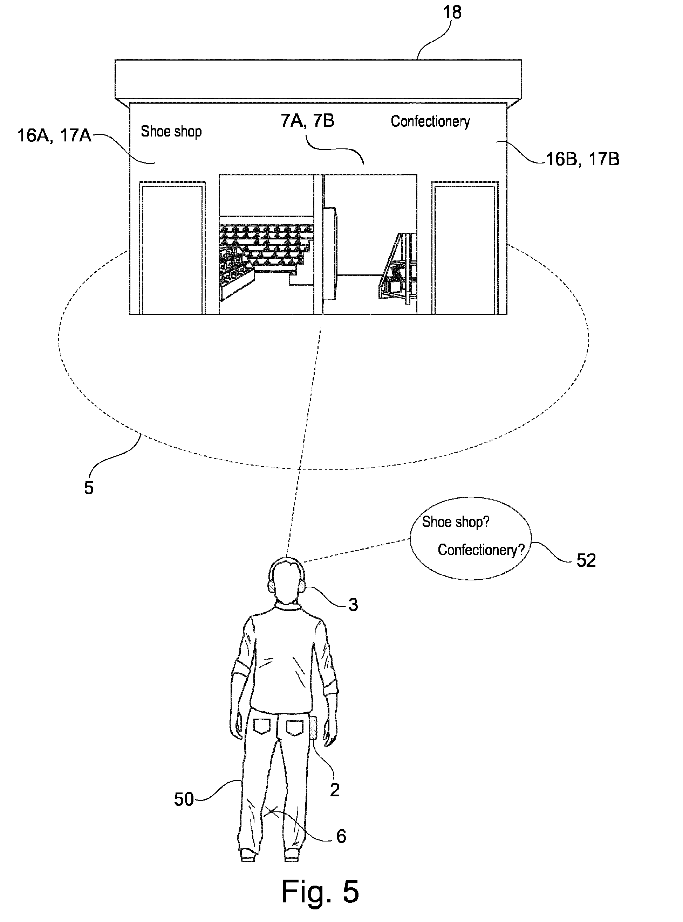

Fig. 5 schematically illustrates an exemplary audio rendering system 1, wherein a geospatial object 18 may comprise a plurality of geospatial object data 7 containing a geographical location interrelating to a geographical position 6 and spatially interrelated in an acoustic scene 5. The plurality of geospatial object data 7 may be categorised differently or equally.

In this particular example, the user 50 is focusing towards a geospatial object 18 comprising a first geospatial object data 7A and a second geospatial object data 7B relating to a first categorised geospatial object data 16A and a second categorised geospatial object data 16B, respectively. Both geospatial object data (7A,7B) may have the same geographical location, but be categorised differently. The portable terminal 2 rendering the retrieved first geospatial object data 7A and the second geospatial object data 7B into the acoustic scene 5 generating a first rendered acoustic scene information 10A and a second rendered acoustic scene information 10B based by the first categorised geospatial object data 16A and the second categorised geospatial object data 16B and the corresponding first categorised acoustic scene information 17A and the second categorised acoustic scene information 17B.

In this situation the first rendered acoustic scene information 10A is about a shoe shop. Furthermore, this categorised audio may further tell the user 50 about the week's discount and new brands for sale. The second rendered acoustic scene information 10B is about a confectioner's shop. This may furthermore tell the user 50 about prices of different sweet delicacies.

In a further embodiment, which will be described later on, the user would be able to filter the rendering of the retrieved categorised geospatial object data (16A, 16B) by a category selection tool 20 based on a category variable 21, e.g. the user 50 has defined "clothing & shoes" as the category variable, and thereby the portable terminal may only render the first retrieved geospatial object data 7A since the "shoe shop" is categorised as "clothing & shoes" and the second geospatial object data 7B is categorised as "food & delicates".

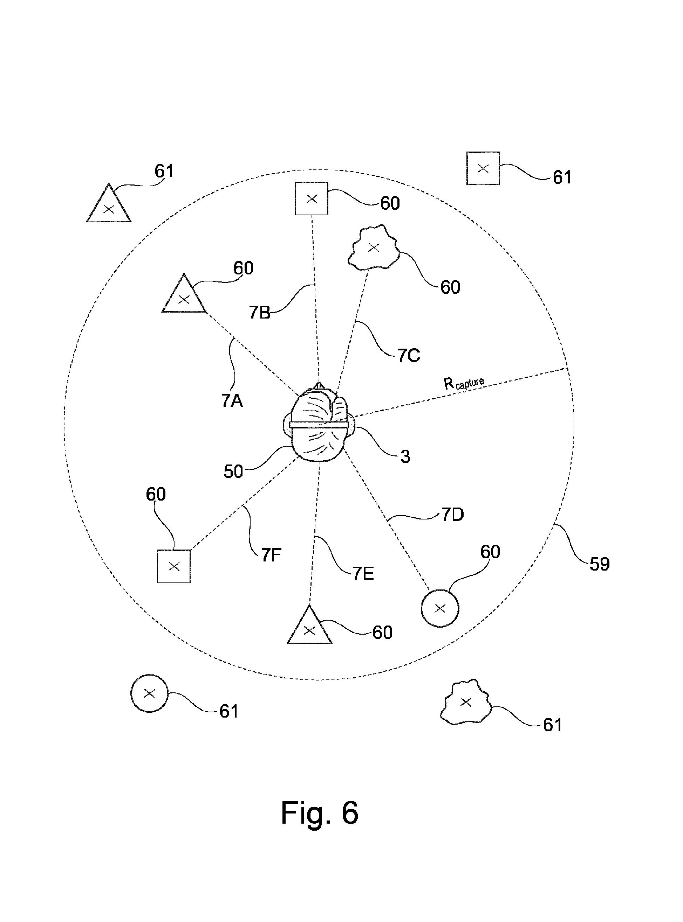

Fig. 6 schematically illustrates an exemplary audio rendering system 1, wherein a user 50is centralized in a capture zone 59, wherein the capture zone 59 may have a capture radius R_{capture}, wherein a geospatial object 18 with a location being inside the capture zone 59 would be retrievable for the portable terminal 2. If the geospatial object 18 with a location outside the capture zone 59 the portable terminal 2 may not retrieve the corresponding geospatial object data 7 including the location of the object.

In this particular example the capture zone 59 comprises a plurality of retrievable geospatial objects 60 and a plurality of none-retrievable geospatial objects 61 are configured outside the capture zone 59. The user 50 is centralised in the capture zone 59 retrieving a plurality of geospatial object data (7A - 7F) of the retrievable geospatial objects 60. The user 50 does not retrieve any geospatial object data 16 interrelating to none-retrievable geospatial objects 61.

The capture radius R_{capture} may be in the range of 0.1 m to 300 m, such as 1 m to 250 m, such as 1.5 m to 150 m, such as 1.5 m to 100 m and such as 1.5 m to 50 m.

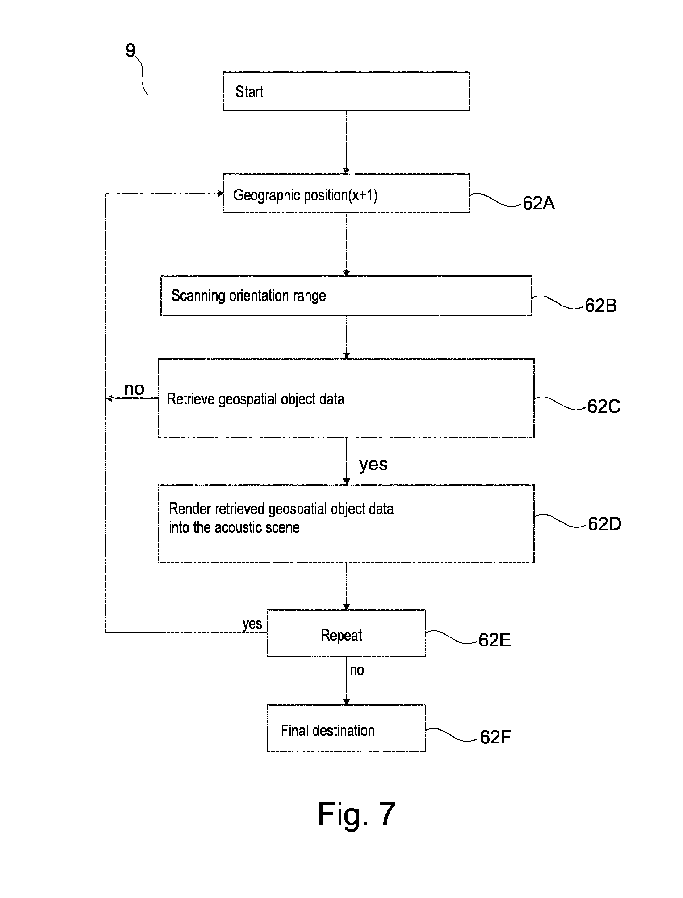

Fig. 7 is a flow diagram illustrating steps of a rendering algorithm 9 of an audio rendering system 1. This embodiment comprises two rendering counters 62 including a geographic position counter 62A and a geographic orientation counter 62B.

The geographic position 6 of a user 50 changes and the geographic position counts one up 62A and the geographic orientation counter 62B scanning in an orientation range 25 centralized at the geographical position 6 of the user 50.

When the counting of the geographic orientation 19 has completed 62B, the rendering algorithm 9 may have retrieved 62C at least one geospatial object data 7. If the rendering algorithm 9 has not found any retrievable geospatial object data 7 the loop stops and the next step is 62A.

The retrieved geospatial object data 7 may be rendered 62D into the acoustic scene 5 based on categorised acoustic scene information 17 representing a corresponding categorised geospatial object data 16. The rendering algorithm 9 repeats 62E until the geographic position counter 62A has finished counting.

The orientation range 25 may be in the range of 10° to 360°, such as 10° to 180° and such as 10° to 120°.

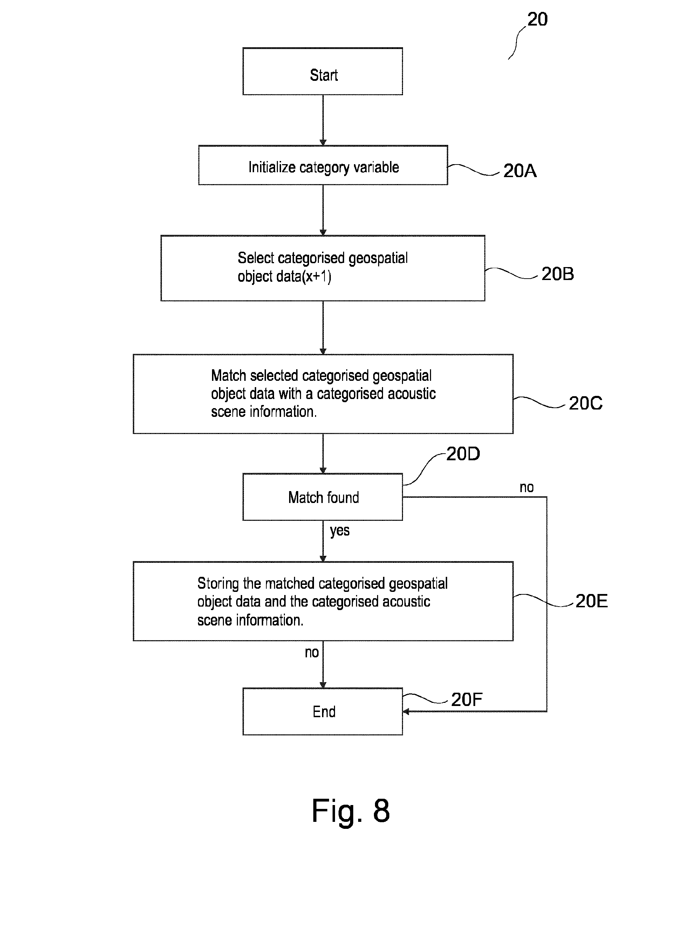

Fig. 8 is a flow diagram illustrating steps of a category selection tool 20 of an audio rendering system 1. In 20A a user initializes at least one category variable, e.g. the user is interested in "Running shoes", and thereby, the user would initialize a first category variable 20A being "Running shoes".

In 20B the category variable 20A is used for extracting the corresponding categorised geospatial object data 16, e.g. the corresponding categorised object data 16A to the category variable 20A may be "sport shop" as the geospatial object 18A.

The at least one categorised geospatial object data 16A from the geospatial object 18Ae.g. "sport shops", is then matched 20C with at least one categorised acoustic scene information 17. If no match found the category selection tool 20 ends 20F.

The at least one categorised geospatial object data 16 and the matched categorised acoustic scene information 17 are stored 20E in a local storage device or on a server. After storing the matched categorised geospatial object data 16 and the categorised acoustic scene information 17 the category selection tool 20 ends 20F.

Thus, the methods outlined and exemplified in figures 7 and 8 form a basis for an implementation of a working embodiment.

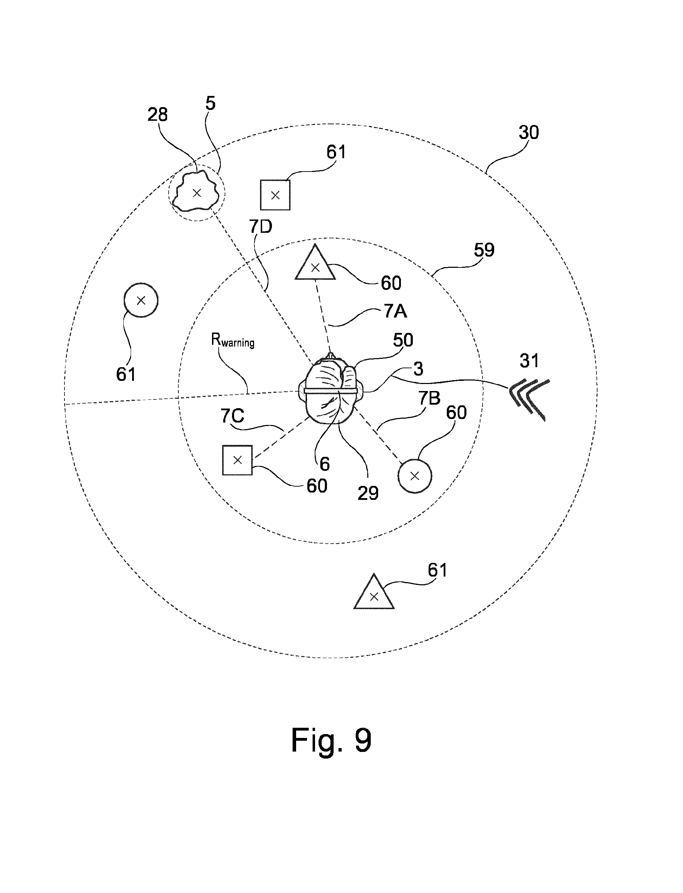

Fig. 9 schematically illustrates a warning zone 30 of an exemplary audio rendering system 1, wherein a user 50 stands in the centre of a capture zone 59 and the warning zone 30. The user 50 wears an audio unit 3 and a portable terminal 2 and is positioned at a geographical position 6. The portable terminal 2 may retrieve respective geospatial object data (7A - 7C) interrelating to the retrievable geospatial objects 60. The user 50 does not otherwise retrieve any geospatial object data 7 interrelating to non-retrievable geospatial objects 61. A warning object 28 is located outside the warning zone 30.

The portable terminal 2 may include a safety tool 29 or a safety feature comprising the feature of generating a warning zone 30 and defining at least one warning object 28 which would activate a rendered warning sound 31 interrelating to at least one warning object 28 being within the warning zone 30.

In fig. 9 the warning object is located inside the warning zone 30. The portable terminal 2 is configured to retrieve the geospatial object data 7D interrelating to the warning object 28 when the warning object 28 is within a warning zone 30. The portable terminal 2 rendering the retrieved geospatial object data 7D into an acoustic scene 5 generates a rendered warning sound 31 sounding into the ears of the user 50. The remaining retrievable geospatial objects 60 have been muted for avoiding any disturbances of the rendered warning sound 31 sounding into the ears of the user 50.

In another embodiment, the audio unit 3 sounds the first rendered acoustic scene information 10A spatially interrelated to the geographical location of the first retrievable categorised geospatial object 10A. When a warning object 28 is within the warning zone 30, a safety tool 29 is configured to play the rendered warning sound 31 on top of the plurality of categorised acoustic scene background sounds (24A - 24C) interrelating to retrieved geospatial object data (7A - 7C).

The warning zone 30 has a warning radius R_{warning}, which may be in the range of 1 m to 1000 m, such as 20 m to 900 m, such as 50 m to 800 m and such as 100 m to 500 m.

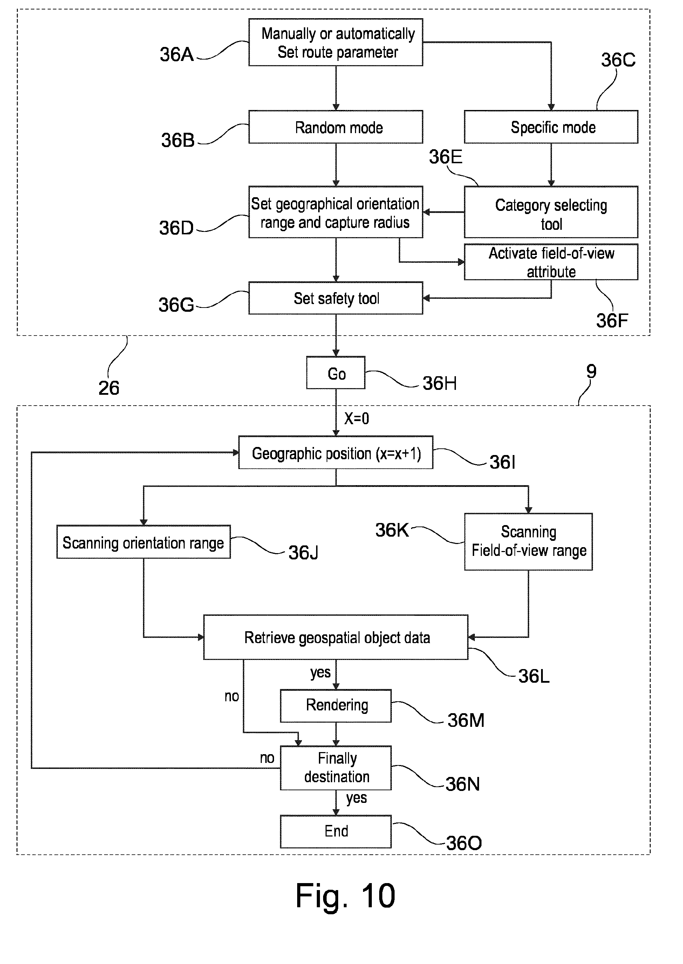

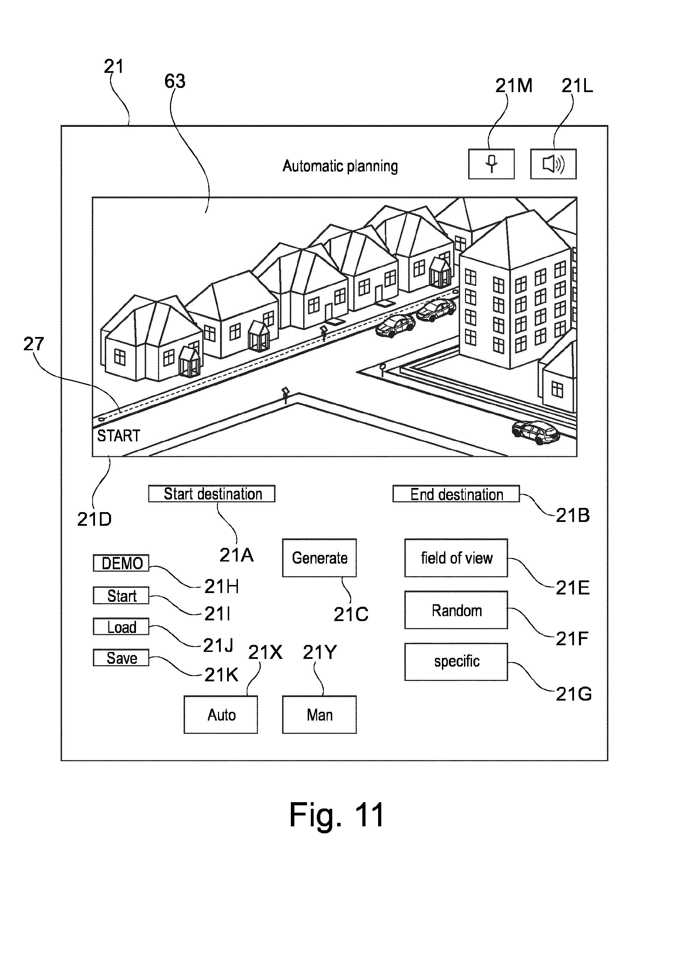

The following figs. 10 to 14 do share common elements and features. As such fig. 10 relates to a method working on elements that are apparent from figs 11 to 13 and figs. 14A and 14B.

Fig. 10 is a flow diagram illustrating steps of a routing tool 26 in combination with a rendering algorithm 9 of an audio rendering system 1. In step 36A a user 50 is able to generate a tracking route in a geographical environment 63. Generating the tracking route 27 is done manually by the user 50. Furthermore, the user 50 is able to apply a start and a finish destination of the tracking route 27 and the routing tool is able to generate a tracking route 27 automatically.

In steps 36B to 36C, the user 50 is able to choose between a random mode 36B or a specific mode 36C. If entering the specific mode 36C, the user 50 enters the category selection tool 22, wherein the user 50 is able to initialize at least one category variable representing a categorised geospatial object data 16, and thereby, storing the matched categorised geospatial object data16 and the corresponding categorised acoustic scene information 17 into an internally storage device of the portable terminal 2 or a server 36F.

If entering random mode 36B the routing tool 26 generates a storing plurality of categorised geospatial objects 16 of randomly chosen categories.

In a further embodiment, the random categories may be decided by a category algorithm based on personal interest being logged or tracked by a social networking server, such as Facebook or Google.

In step 36D the user 50 sets the orientation range 25 and the capture radius R_{capture}, and in step 36F the user 50 may choose to activate the field-of-view attribute 15 wherein the user 50 initializes the first field-of-view angle Θ₁ and the second field-of-view angle Θ₂. Then afterwards the user 50 may define at least one warning object 28 and the warning radius R_{warning} in 36G.

In step 36H, the user starts tracking, and thereby the rendering algorithm 9 is initialized. In step 36I the geographical position 6 of the user 50 is determined (e.g. measuring GPS coordinates) and when the user 50 moves, a geographic position counter 62A increments. At the specific geographic position 6' of the user 50, the orientation range 26 and/or the field-of-view range 64 may be scanned in steps 36J and 36K, respectively.

When finished scanning in 36J and 36K, the portable terminal 2 may retrieve 36L at least one geospatial object data 7 interrelating to a retrievable geospatial objects 60. In 36M the rendering algorithm 9 renders the at least one retrieved geospatial object 18 containing geospatial object data 7 into an acoustic scene 5 generating at least one rendered acoustic scene information 10 and/or at least one categorised acoustic scene background sound 24. If the portable terminal 2 does not retrieve any geospatial object data 7 the rendering is not performed.

If the user 50 has reached the finally destination, defined in step 36A, the rendering algorithm 9 ends 360.

Fig. 11 illustrates an exemplary of a graphical user interface (GUI) of an automatic routing tool 21 activated by selecting automatic routing tool 21X. The user 50 is able to define a start location 21A and a end location21B and then by selecting 21C, the automatic routing tool 21 generates a tracking route 27. If the generated tracking route 27 is not acceptable, the user 50 is able to select generate 21C a plurality of times until a tracking route 27 is accepted by the user 50. The generated tracking tool in a geographical environment 63 is visualized in 21D.

The system may be configured so that the user is able to set the field-of-view attribute 15, the random mode 36B and the specific mode 36C in 21E, 21F and 21G, respectively.

By selecting 21G, the user 50 is able to simulate the tracking route 27. By voice recognition 21M, the user may control the automatic routing tool 21 with voice commands, and by the speaker 21L the user may receive guiding instruction to the automatic routing tool 21.

The system may be configured so that the user 50 may activate the rendering algorithm 9 by activating start 21L. The system may further be configured so that the user is able to load 21J a previous saved tracking route 27 and a geographical environment 63. The system may be able to save 21K the generated tracking route 27. Furthermore, the system may be able to simulate the automatically planned route or tracking route in a demo mode 21H.

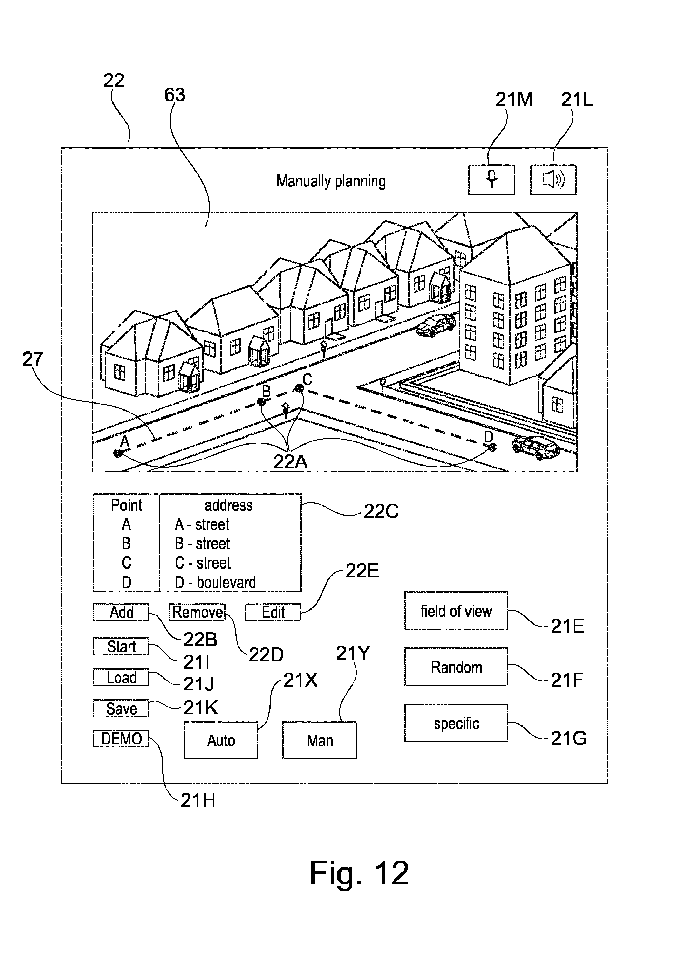

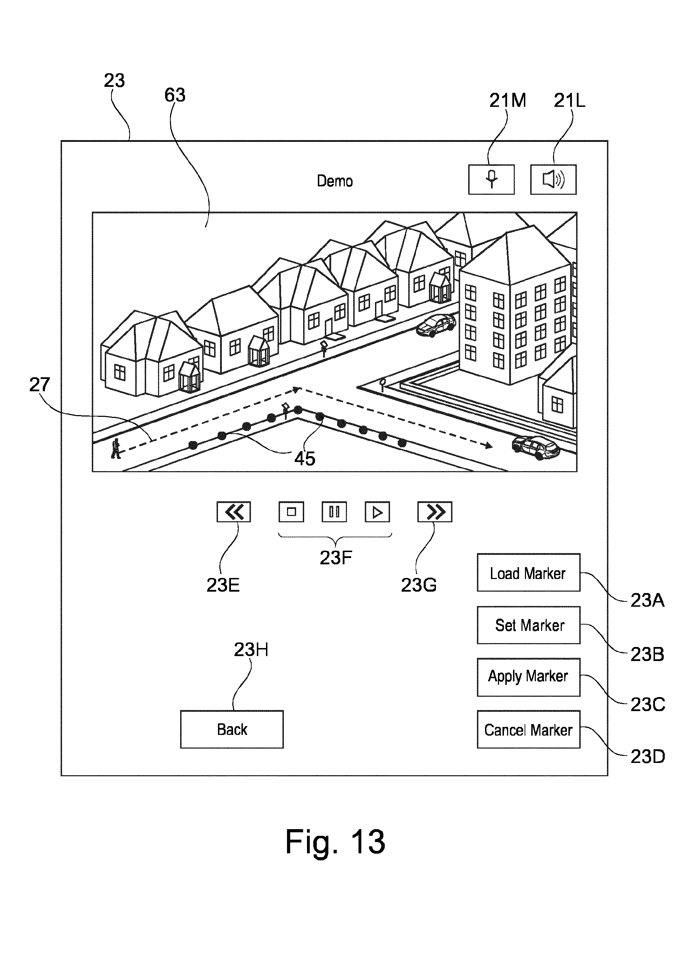

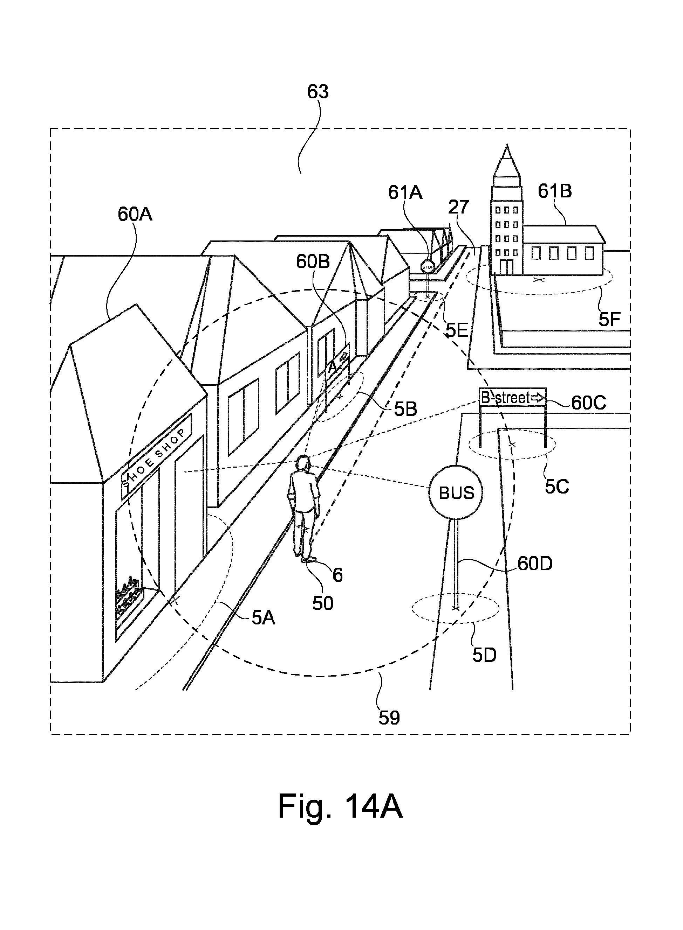

Fig. 12 illustrates an exemplary of a graphical user interface (GUI) of a manual routing tool 22 activated a manual routing tool 21Y. The system is configured so that the user 50 is able to initialize a plurality of waypoints 22A being linked together to a tracking route 27. The system may be able to add 22B waypoints to a waypoint list 22C. Furthermore, the system may be able to remove 22D and/or edit 22E a waypoint from the waypoint list 22C. Fig. 13, with reference to figures 14A-C, illustrates an exemplary of a graphical user interface (GUI) of a demo tool 23 simulating a tracking route 27 in a geographical environment 63. The simulation may be audio based and/or visual based. The audio based simulation guides the user 50 by auto playing at least one categorised rendered acoustic scene information 17 and/or a categorised acoustic scene background sound 24 and a geographical environment background sound 24 representing the geographical environment 63 of the tracking route 27. The system may be configured so that in the (visual) environment 21D, the user 50 is able to operate, possible by seeing, the visualized simulation of the tracking route 27. The system may be configured so that the user may start, stop and pause 23F the simulation. Furthermore, the system may be implemented so that the user may spool backward 23E and forward 23G the simulation.

Furthermore, selecting load marker 23A, at least one relevant and previous saved marker geographical marker 45 is loaded from a marker server 49 or a storage device into the geographical environment 63 of the tracking route 27. The at least one marker geographical marker 45 interrelates to a geographic position 6 and to an acoustic marker 48. The loaded marker geographical marker 45 may represent an obstacle of any kind which the user 50 or another user has previously experienced when being in the geographical environment 63.

By the set marker feature 23B of the system, the user is able to change the geographical location of a geospatial object 6 of the marker geographical marker 45. Furthermore, the system may be implemented so that the user 50 may apply a new 23C marker geographical marker 45. The system may further be enabled to cancel a marker geographical marker23D.

An exit 23H may also be provided.

As an example, markers 45 are placed - or created by categorising street lamps - along the pavement of the route. Each Marker 45

Fig. 14A -14B schematically illustrates an exemplary audio rendering system 1, wherein a user 50, wearing an audio unit 3 and a portable terminal 2, moves a geographical position 6 along a tracking route 27 in a geographical environment 63. The user 50 is surrounded by a plurality of geospatial objects 18, e.g. signs, buildings, public transportation etc. Each of the geospatial objects 18 is spatially interrelated to a respective acoustic scene 5 comprising a categorised acoustic scene information 17 and possibly at least one categorised acoustic scene background sound 24.

Fig 14A the user 50 stands at a geographical position 6 wherein the capture zone comprises a plurality of retrievable geospatial objects (60A-60D), including a first retrievable geospatial object 60A being a "shoe shop", a second retrievable geospatial object 60B being "A street sign", a third retrievable geospatial object 60C being "B street sign" and a fourth retrievable geospatial object 60D being a "STOP sign". Furthermore, a plurality of non-retrievable geospatial objects (61A and 61B) appear outside the capture zone 59. Each of the retrievable geospatial objects (60A-60D) may be rendered to an acoustic scene object (5A-5D), correspondingly being spatially interrelated to the geographical position 6 in the acoustic scene 5.

The audio unit 3 sounds a 3D sound comprising plurality of categorised acoustic scene background sounds (24A - 24D), which is spatially interrelated to the geospatial object data 7 containing geographical locations (7A - 7D) of the retrievable geospatial object (60A - 60D), respectively. The user 50 listens to the 3D sound generated so that the user experiences a 3D audio world or audio scene which may be translated in the mind of the user into a picture of a virtual geographical environment representing the real geographical environment surrounding the user 50.

In this particular example, the user 50 has activated categorisation according to "street signs" whereby the second retrievable geospatial object 60B is retrieved, and thereby, the audio unit 3 is sounding into the ears of the user 50 a 3D sound comprising a second rendered acoustic scene information 10B playing onto top of the remaining categorised acoustic scene objects (5A, 5C and 5D) being spatially interrelated to the geographical position 6 according to the respective geographical locations (78A, 7C and 7D). The second rendered acoustic scene information 10B is spatially interrelated to the geographic position 6 according to the location contained in the data of the second retrievable geospatial object 60B.

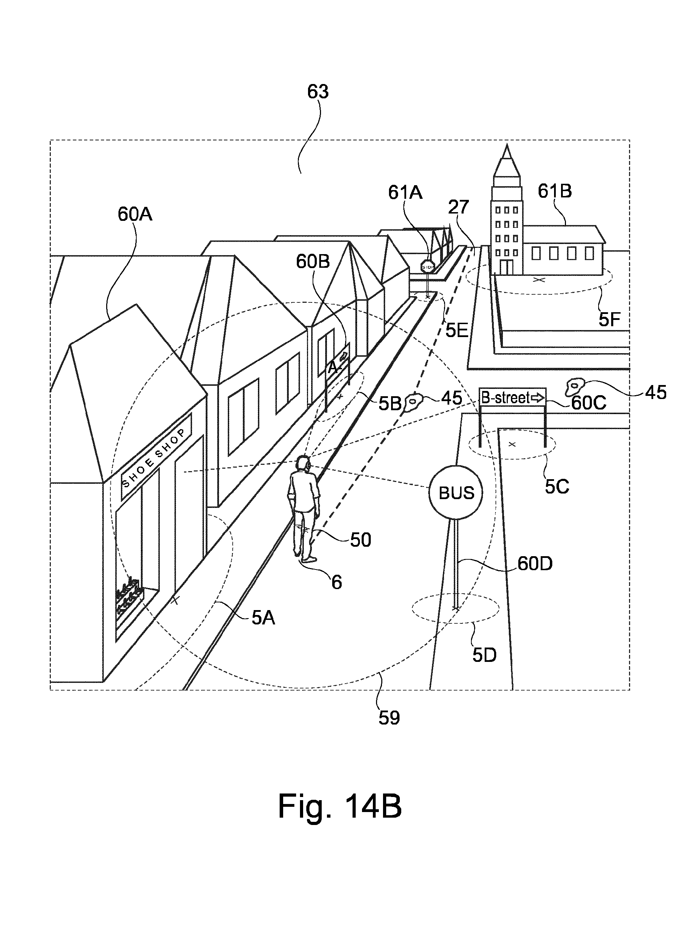

In the situation illustrated in fig 14B, the user 50 stands at a geographical position 6 within a capture zone comprising a plurality of retrievable geospatial objects (60A - 60B), including a first retrievable geospatial object 60A being categorised a "shoe shop", a second retrievable geospatial object 60B being categorised an "A street sign", a third retrievable geospatial object 60C being categorised a "B street sign" and a fourth retrievable geospatial object 60D being categorised a "STOP sign". Additionally, the capture zone comprises a geographical marker45.

The audio unit 3 sounds a 3D sound comprising a plurality of categorised acoustic scene background sounds (24A - 24D) that are spatially interrelated to the geographical locations (7A - 7D) of the retrievable geospatial object (60A - 60D), and furthermore, the 3D sound comprises an acoustic marker 48 playing on top of the categorised acoustic scene background sounds (24A - 24D). The acoustic marker 48 is spatially to the geographical position 6 interrelated to the location of the marker geographical marker45.

In this particular example, the acoustic marker 48 tells the user 50 that he/she should be careful, e.g. the pavement is in poor condition.

In another example, the audio rendering system may comprise a tracking route for a visually impaired user wanting to go from a start location to an end location using public transportation and with a minimum of walking. The user is blind.

In the routing tool the user initializes voice recognition for operating the routing tool. The user defines start and end locations in the routing tool. Furthermore, the user commands the routing tool to use public transportation. The routing tool automatically generates a route. The first proposal of a route did not satisfy the user. The user then commands the routing tool to redo the route. The user is now satisfied. Furthermore, the user has chosen that he/she is only interested in a category being "public transportation signs", and thereby, the user does not receive rendered acoustic scene information which is not related to the chosen category. Additionally, the user has loaded geographical marker.

The planned route is now initialized and the user starts walking.

The user receives from the audio rendering system guiding voice and sounds and background sounds representing the geographical environment which the planned route is entangling.

Suddenly, the user hears a categorised acoustic scene background sound representing a retrievable geospatial object being a first public transportation sign. The user is focusing towards the categorised acoustic scene background sound and presses an activation button on the audio unit. The user now receives the rendered acoustic scene information spatially interrelated to the first public transportation sign.

While the user is guided towards the first public transportation sign the rendered acoustic scene information tells the user that "bus A6 going towards destination X arrives in 5 minutes". The user knows that he has arrived at the correct waypoint being the first public transportation sign.

While the user is sitting in the bus he/she retrieves continuously from the audio rendering system information regarding the next stop, e.g. the name of the street where the next bus stop is configured to. The user has now gone off the bus A6 and the audio rendering system is guiding the user towards the second public transportation sign (i.e. second waypoint).

While the user is listening to the background sound and the guiding voice, the user suddenly hears an acoustic marker representing an obstacle on his route. The user is focusing on the obstacle while still walking on the tracking route. The sound level of the acoustic marker increases while he/she is nearing the obstacle. The user avoids the obstacle since he/she now hears the sound level of the acoustic marker is reducing and coming from behind of the user while walking towards the second waypoint.

The user hears a second categorised acoustic scene background sound representing the second public transportation sign (i.e. second waypoint). The user is guided towards the second waypoint by the second categorised acoustic scene background sound while listening to the second rendered acoustic scene information telling that "bus A2 going towards destination B arrives in 2 minutes".

The bus arrives and the user enters the bus and being driven to the end location.

## Claims

1. Audio rendering system (1) comprising:
at least one portable terminal (2) configured to receive geospatial object data (7) from at least one geospatial object data server (8), said geospatial object data (7) being interrelated to a geographical position (6), and said at least one portable terminal (2) being configured to render retrieved geospatial object data (7) into an acoustic scene (5) by a rendering algorithm (9), said acoustic scene (5) being spatially interrelated to the geographical position (6) in such a way that the acoustic scene (5) is perceived observed from the geographical position (6), and
at least one audio unit (3) configured to sound a rendered acoustic scene information (10) into at least one ear of a user (50),
wherein the audio rendering system(1) further is configured for rendering said retrieved geospatial object data (7) into the acoustic scene (5) based on categorised acoustic scene information (17) representing corresponding categorised geospatial object data (16).

2. An audio rendering system (1) according to claim 1, wherein the categorised geospatial object data (5) is configured to correspond to categorised acoustic scene information (17) sounding a distinguishing sound representing at least one category.

3. An audio rendering system (1) according to any of the preceding claims, wherein the rendered acoustic scene information (17) comprising at least one 3D sound (11) configured to sound at least three distinguishing acoustic scenes (5), wherein the at least three acoustic scenes (5) are spatially interrelated to at least one geographical position (6), respectively.

4. An audio rendering system (1) according to any of the preceding claims, wherein the audio unit (3) comprises a geographical position unit (13) configured to estimate the geographical position (6) of the audio unit (3).

5. An audio rendering system (1) according to any of the preceding claims, wherein the audio unit (3) comprises a geographical orientation unit (14) for estimating a geographical orientation (19) of a user, when the geographical orientation unit (14)is placed in its intended operational position.

6. An audio rendering system (1) according to any of the preceding claims, wherein the rendering algorithm (9) is configured to render the retrieved geospatial object data (7) into the acoustic scene (5) based on the geographical position (6) and/or the geographical orientation (19).

7. An audio rendering system (1) according to any of the preceding claims, wherein the rendering algorithm (9) is configured to render the retrieved geospatial object data (7) into the acoustic scene (5) based on a field-of-view range (64).

8. An audio rendering system (1) according to any of the preceding claims, wherein the portable terminal (2) comprises a category selection tool (20) configured to select at least one categorised geospatial object data (16), wherein the selected geospatial object data (7) is being rendered into at least one acoustic scene (5) based on at least one category variable (20A).

9. An audio rendering system (1) according to any of the preceding claims, the portable terminal (2) comprises a safety tool (29) configured to activate at least one rendered warning sound (31) when a warning object (28) is within a warning zone (30), and wherein the at least one rendered warning sound (31) is spatially interrelated to a geographical position (6) of the warning object (28).

10. An audio rendering system (1) according to claim 9, wherein the safety tool (29) is configured to mute at least one rendering acoustic scene information (10) and playing at least one rendered warning sound (31).

11. An audio rendering system (1) according to any of the preceding claims, further comprising a routing tool (26) for providing at least one route (27) with at least one geographical position (6) between at least one start location(21A) and at least one end location(21B), wherein the at least one route (27) includes at least one rendered acoustic scene information (10) being spatially interrelated to the at least one geographical position (6) along the least one route (27).

12. An audio rendering system (1) according to claim 11, wherein the routing tool (26) configured to handle a marker geographical marker (45), which marker geographical marker (45) is configured to represent an acoustic marker (48) being spatially interrelated to the geographical position (6).

13. An audio rendering system (1) according to claim 11 or 12, wherein the routing tool (26) is configured to receive at least one geographical acoustic marker (48) from a marker server (49).

14. An audio rendering system (1) according to any of the preceding claims, where the system is configured with means for allowing a user to focus on a geographical object data (7); subsequently selecting and retrieving geographical object data (7) and rendering said retrieved geographical object data (7) into the acoustic scene (5) as a narrative.

15. An audio rendering system (1) according to claim 14, where focus on a geographical object data (7) is a determined as an intersection between a line of sight from the geographical position (6) for a given orientation and a geographical position of the geographical object.

16. An audio rendering system (1) according to any of the preceding claims, where multiple geographical object data (7) are within a given area are resolved by separating each geographical object data (7);
said separating is performed spatially; such as by stacking each geographical object data (7) on top of each other or with different polar angles; or
said separating is performed temporally; such as sounding each geographical object data (7) sequentially and separated in time.

17. Method of sounding rendered acoustic scene information (10) into at least one ear of a user (50) using an audio rendering system (1) and comprising the steps of
- receiving geospatial object data(6) from at least one geospatial object data server (8), which geospatial object data (7) is interrelated to a geographical position (6),
- rendering retrieved geospatial object data (7) into an acoustic scene (5) by a rendering algorithm (9), which acoustic scene (9) is spatially interrelated to the geographical position (6), and
where the rendering of retrieved geospatial object data (7) into the acoustic scene (5) is based on a categorised acoustic scene representation (17) corresponding to a categorised geospatial object data (16).

18. Method according to claim 17, comprising the steps of
- providing at least one route (27) with at least one geographical position (6) between at least one start location (21A) and at least one end location (21B), wherein the at least one route (27) includes at least one acoustic scene (5) being spatially interrelated to the at least one geographical position (6) along the least one route (27), and
- moving said geographic position (6) between said least one start location (21A) and said least one end location (21B) and continuously sounding rendered acoustic scene information (10) into at least one ear of a user (50) according to claim 14 for each geographic position (6).
